# Europäisches Patentamt

# European Patent Office

# Office européen des brevets

(19)

(11) Veröffentlichungsnummer: **0 154 845**
**A2**

(12) **EUROPÄISCHE PATENTANMELDUNG**

(21) Anmeldenummer: **85101786.3**

(22) Anmeldetag: **19.02.85**

(51) Int. Cl.⁴: **B 01 D 25/00**

(30) Priorität: **24.02.84 DE 3406735**

(43) Veröffentlichungstag der Anmeldung: **18.09.85**
**Patentblatt 85/38**

(84) Benannte Vertragsstaaten: **CH DE FR GB LI**

(71) Anmelder: **Sartorius GmbH., Weender Landstrasse 94-108, D-3400 Göttingen (DE)**

(72) Erfinder: **Nodes, Rudolf, Nürtingerstrasse 10, D-7030 Böblingen (DE)**
Erfinder: **Hoffmann, Jürgen, Dr., Gartenstrasse 21, D-3414 Hardegsen-Ellierode (DE)**

(74) Vertreter: **Köhler, Rudolf, c/o Sartorius GmbH Weender Landstrasse 94-108, D-3400 Göttingen (DE)**

(54) **Flaches Filterelement zur Filtration von Fluiden.**

(57) Ein auswechselbares, rechteckiges, flaches, selektiv permeables Filterelement (1) zum Bestücken der rahmenartigen Sektion (27, 30) eines Schichtenfiltergerätes (20) aus Metall und/oder Hartkunststoff zur Filtration von Fluiden (Flüssigkeit und/oder Gas), ist mit seinem Rand leckdicht und sandwichartig zwischen einem Gehäuseteil (30) trubraumseitig und einem Gehäuseteil (27) filtratraumseitig einspannbar und entgegen dem Druckgefälle auf einer drainierenden Gehäusestützplatte (27) abgestützt, wobei der Trubraum und Filtratraum mit Anschlüssen (22, 25) für die Versorgung und Entsorgung der Gehäuseräume ausgestattet sind. Das flache Filterelement (1) ist aus einem dem Innenmaß eines Hohlraumes (30) in Länge, Breite und Tiefe (dieses Innenmaß im wesentlichen ausfüllenden) angepaßten, in eine Vielzahl von eng aneinanderliegenden Falten plissierten Flachfilterband gebildet, wobei die offenen Falten und die Stegrücken einer Seite der Plissierung dem Trubraum (41) und die offenen Falten und die Stegrücken der anderen Seite dem Filtratraum (47) zugewandt sind und die zu einem flachen Quader (Platte) geformte Plissierung des mindestens einlagig aufgebauten Filterbandzuschnittes ist rahmenartig mit einer Dichtung (6) aus Kunststoff eingefaßt, und diese ist mit einem angeformten Dichtungsflansch (7) ausgestattet, mit welchem die Filterkassette zwischen den Gehäuseteilen (27, 30) leckdicht einklemmbar ist. Die Plissierung ist beidseitig mit einem Stützgitter (10, 11) abgedeckt, dessen Ränder zur Versteifung der Filterkassette im Material der Dichtung (6) und/oder des Dichtungsflansches (7) verankert sind.

Sartorius GmbH                  Akte SM 8401
Weender Landstraße 94-108       Kö-kl
D-3400 Göttingen

---

Flaches Filterelement zur Filtration von Fluiden

---

Beschreibung

Die Erfindung betrifft ein auswechselbares flaches, selektiv permeables Filterelement zum Bestücken eines flachen Filtergehäuses zur Filtration von Fluiden in der: Pharmazeutik-, Kosmetik-, Photo-, Zucker-, und Konservenindustrie sowie zur Filtration in der Biochemie, in der Getränke-, Nahrungs- und Genußmittelindustrie und zur Filtration chemisch-technischer Produkte. Von der Gattung her handelt es sich um ein Filterelement, welches mit seinem Rand leckdicht und sandwichartig zwischen einem Gehäuseteil mit Trubraum (Retentatraum) und einem Gehäuseteil mit Filtratraum (Permeatraum) eingespannt ist und entgegen dem Druckgefälle drainierend abgestützt ist, wobei Trubraum und Filtratraum mit Anschlüssen zur Versorung und Entsor-

- 2 -

gung der Gehäuseräume ausgestattet sind und bei dem mindestens ein Gehäuseteil einen scheibenförmigen Freiraum für die Unterbringung von Filtermitteln oder Filterhilfsmitteln aufweist. Zum Stand der Technik am Prioritätstag wird hierzu verwiesen auf die in Kopie beiliegenden Prospekte "Seitz Schichtenfilter" und "Schenk Filter". Für diese großtechnischen Anlagen für die vorgenannten Industrien gelangen ein- oder mehrlagig aufgebaute Flachfilterzuschnitte in Form von Filtertüchern, Tiefenfiltern, Membranfiltern und anderen Filtermedien in Kombination mit Filterhilfsmitteln wie Anschwemmfilter aus Kieselgur oder Zellstoff zum Einsatz. Zum Stand der Technik wird auch noch auf die US-PS 3 520 803 und DE-AS 2 145 661 verwiesen.

Derartige Geräte sind bezüglich der wiederverwendbaren Gehäuseteile im Hinblick auf aggressive Fluide aus beschichtetem Aluminium, Edelstahl und/oder Hartkunststoff, z.B. Nylon gebildet und in ihrem Anschaffungswert entsprechend teuer. Als Verbrauchsmaterialien sind jeweils die auswechselbaren Filtermittel und Filterhilfsmittel anzusehen. Um die großen Fluidmengen filtrieren zu können, müssen eine Vielzahl von Gerätesektionen eingesetzt werden, um eine ausreichende Gesamtfilterfläche zu erreichen, da die Filterfläche einer Sektion im Grunde nach bei dem bisherigen bekannten Einsatz bei beidseitiger Belegung einer Filterplatte nur etwa der beidseitigen Fläche dieser Filterplatte entspricht.

SM 8401

Neben diesen großtechnischen Anlagen sind auch Filtergeräte in Plattenbauweise bekannt, bei denen Verteiler- und Stützplatten mit Ultrafiltrationsmembranen fest verbunden sind und als Kassette zwischen Gehäuseendplatten gemäß DE-OS 31 27 548 einspannbar sind. Für die Filtration kleinerer Flüssigkeitsmengen, insbesondere für die Ultrafiltration, sind auch Laborgeräte bekannt, die aus einem Gehäuseoberteil und einem Gehäuseunterteil aus Metall bestehen, zwischen die sandwichartig ein Flachfilterzuschnitt - auch in Form einer Ultrafiltrationsmembrane ggf. in Kombination mit einem Vorfilter - einspannbar sind. Derartige Geräte sind z.B. bekannt durch die DE-OS 28 25 444 und DE-OS 32 00 443.

Der Erfindung liegt daher die Aufgabe zugrunde, mit einfachen Mitteln Filtergehäuse aus Metall und/oder Hartkunststoff der vorstehend genannten Einsatzgebiete und mit den in den Oberbegriffen der Haupt- und Nebenansprüche angegebenen baulichen Spezifikationen - ohne an diesen eine grundsätzliche bauliche Veränderung vornehmen zu müssen - bezüglich ihres filtrationstechnischen Einsatzes mittels eines speziellen Filterelementes zu erweitern und effektiver auszunutzen, ohne daß die Beschickung der Filtergeräte von der Handhabung her damit gegenüber der bisherigen Praxis verschlechtert - möglichst noch verbessert - wird.

SM 8401

Diese Aufgabe wird im wesentlichen dadurch gelöst, daß das spezielle Filterelement für den Einsatz in dem vorgenannten Gehäusespezifikationen aus einem mindestens einlagig aufgebauten Flachfilterbandzuschnitt gebildet ist, der zu einem flachen, plattenförmigen Quader plissiert ist und umlaufend mit einer rahmenartigen Einfassung aus Dichtungsmaterial und einem integrierten, umlaufenden Dichtungsflansch ausgestattet ist, mit dem die dem Trubraum zugewandte Seite der Plissierung von der des dem Filtraraum zugewandten Seite der Plissierung innerhalb des Filterelementes leckdicht getrennt ist und mit Hilfe des umlaufenden Dichtungsflansches zwischen den umlaufenden Rändern zweier Gehäusesektionen leckdicht einspannbar ist. Die spezielle Ausbildung ist in den Haupt- und Nebenansprüchen angegeben. Vorteilhafte Weiterbildungen sind in den Unteransprüchen angegeben.

Der Erfindungsgedanke von Aufgabe und Lösung berücksichtigt dabei schon einen Stand der Technik, nach dem durch konstruktive Maßnahmen eine Vergrößerung der Filterfläche durch Faltung des Filterelementes möglich ist, wie z.B. bekannt durch GB-PS 1 477 779, DE-OS 31 43 542, DE-OS 31 28 546.

Der allgemeinde Erfindungsgedanke und dessen spezielle Realisationen sind in mehreren Ausführungsbeispielen anhand der beiliegenden schematischen Zeichnung näher erläutert.

SM 8401

- 5 -

Dabei zeigt:

Fig. 1 schematisch einen vertikalen Längsschnitt durch eine industriell technische Filteranlage, bestückt mit herkömmlichen Filtertüchern (rechts) und bestückt mit plissierten Filterelementen (links),

Fig. 2 einen Detailschnitt der Randausbildung des Filterelementes und seiner Einspannung zwischen zwei Gehäusesektionen,

Fig. 3 schematisch einen vertikalen Längsschnitt durch ein Filtergerät mit plissierten Filterelementen und explosionsartig auseinandergezogenen Einzelteilen,

Fig. 4 in einer vereinfachten und perspektivischen Darstellung das zwischen zwei Gehäusesektionen einspannbare Filterelement,

Fig. 5 in entsprechender Darstellung eine Variante eines Trubrahmens nach dem Stand der Technik,

Fig. 6 in perspektivischer Ansicht eine bevorzugte Ausführungsform eines Filterelementes,

Fig. 7 entsprechend der Darstellung in Fig. 2 einen Schnitt durch das Filterelement nach Fig. 6 und dessen Einsatz zwischen zwei Gehäusesektionen,

Fig. 8 in Seitenansicht die Grundeinheit eines modifizierten Filtergerätes mit zwei Filterelementen in Reihenschaltung.

SM 8401

Fig. 9 die Frontansicht einer Gehäuseendplatte und eines Hohlrahmens mit Filterabstützung gemäß Fig. 8,

Fig. 10 in entsprechender Darstellung eine weitere
und 11 Variante zu Fig. 8 und 9,

Fig.12 ein betriebsfertig zusammengesetzes Filtergerät, geeignet für die statistische und dynamische Filtration,

Fig.13 eine Draufsicht auf ein modifiziertes Filterelement, insbesondere für die Ultrafiltration,

Fig.14 einen Querschnitt durch das Filterelement gemäß Fig. 13 und dessen Einsatz in einem Gehäuse für die dynamische Filtration,

Fig.15 in perspektivischer Ansicht mit aufgefächerter Plissierung eine Variante zum Filterelement nach Fig. 13 und 14 geeignet für die Ultrafiltration und Mikrofiltration,

Fig.16 eine Draufsicht auf ein kreisrundes Filtergehäuseunterteil mit eingelegtem quadratischen Filterelement und kreisrundem Dichtungsflansch,

Fig.17 einen Vertikalschnitt durch ein rundes und flaches Filtergehäuse gemäß Fig. 16 nach der Linie 17-17,

Fig.18 einen vertikalen Querschnitt durch einen Filtergehäuserand gemäß Fig. 17 mit zusätzlichem Zwischenring und abgewandeltem Filterelement und

SM 8401

Fig.19 die Draufsicht auf ein abgewandeltes Filterelement für den Einsatz in einem runden Flachfiltergerät bzw. einer runden Gehäusesektion.

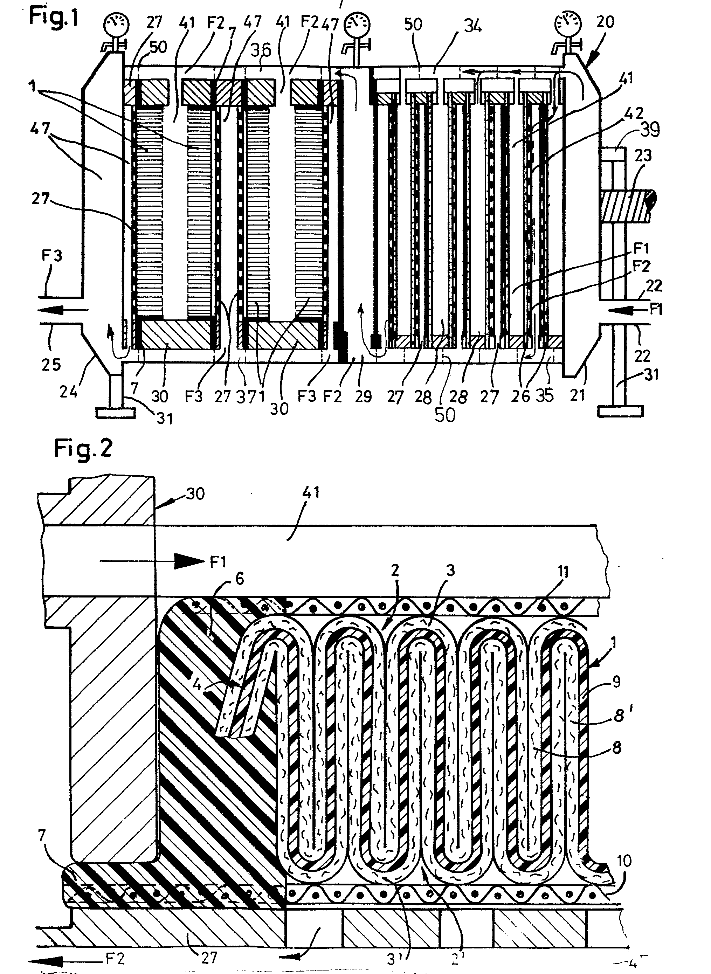

Das Filtergerät gemäß Fig. 1 hat bezüglich seiner Gehäusebauteile den zum Stand der Technik gehörenden Aufbau, wie er eingangs beschriebenen worden ist bzw. wie
er auch in der DE-OS 28 26 781 teilweise beschrieben ist.

Das als großtechnisches Standgerät (Industriemaßstab)
mit Stützfüßen 31 ausgebildete Filtergerät 20 weist
eine Vielzahl von Gehäusesektionen auf. Diese bestehen
im wesentlichen aus dem ortsfesten Deckel 24, dem losen
Deckel 21, die mit einer Vielzahl von Anschlüssen 22,25
für die Versorgung und Entsorgung der Fluide Fl bis F3
ausgestattet sind. Die beweglichen Gehäusesektionen 21,
27,28,29,30 sind auf horizontalen Holmen 39 gelagert, im
Bereich der Versorgungs- und Entsorgungsleitungen 34 bis
37 sektionsmäßig durch O-Ring-Dichtungen 50 abgedichtet
und randseitig durch die Filterelemente abgedichtet. Die
mit Filterelementen bestückten Sektionen werden über
einen zentralen Spindeltrieb 23 bzw. ein Hydraulikaggregat leckdicht verpreßt.

Die rechte Hälfte des Gerätes ist zur Erläuterung des
Erfindungsgedankens mit herkömmlichen Schichtenfiltern 26
oder Filtertüchern bestückt, wobei eine doppelwandige,
siebförmige Stützplatte 27 beidseitig mit Filtertüchern
bzw. Schichtenfiltern 26 belegt ist und der von den Siebplatten 27 gebildete Freiraum eine Sektion des gesamten
Filtratraumes 47 bildet und ein als Hohlrahmen 28 ausgebildete Gehäusesektion Teil des Trubraumes 41 ist.

SM 8401

Mehrere dieser Sektionen 27,28 sind durch die Leitungen 34, 35 strömungstechnisch parallel geschaltet und der Filtratraum 47 mündet in einer Umlenkkammer 29, so daß das Filtrat F2 bzw. das Vorfiltrat in die zweite Gehäusehälfte umgelenkt und in zwei Trubrahmen 30 eingeleitet wird, die mit je zwei plisserten Filterelementen 1 bestückt sind und diese sich entgegen dem Druckgefälle auf der Filtratseite F3 an doppelwandigen Siebplatten 27 abstützen. Die Abdichtung der Filterelemente 1 gegenüber den Gehäusesektionen 27,30 erfolgt durch umlaufende Flanschdichtungen 7, währenddessen die Abdichtung der Leitungssektionen durch die üblichen O-Ring-Dichtungen 50 erfolgt. Wie bereits aus der schematischen Zeichnung Fig. 1 deutlich wird, ist durch die Plissierung eine mehrfache Unterbringung von Filterfläche im Vergleich zu der einfachen Bestückung nach dem Stand der Technik möglich, wie er rechts im Filtergerät gezeigt ist.

Das Filterelement 1 gemäß Fig. 2 besteht aus mindestens einer Lage, vorzugsweise jedoch aus mehreren unter filtrationstechnischen Gesichtspunkten gestuften Lagen von Flachfilterbandzuschnitten 8,8',9, welche deckend aufeinandergestapelt, gemeinsam in eine Vielzahl von Falten plissiert sind. Die Gesamtstärke des Filterelementes 1 richtet sich nach dem zur Verfügung stehenden freien Maß der Hohlrahmen 30 bzw. Trubrahmen. Dabei sind die offenen Falten 2 und die in einer Ebene liegenden Stegrücken 3 der einen Seite der Plissierung dem Trubraum 41 zugewandt und die Faltenöffnungen 2' und die Stegrücken 3' der anderen Seite der Plissierung dem Filtratraum 47 zugewandt und stützen sich auf der Siebplatte 27 entgegen dem Druckgefälle ab. Die zu

SM 8401

- 9 -

0154845

einem Quader geformte Plissierung ist stirnseitig (5) und randseitig (4) durch eine Dichtung 6 aus Kunststoff eingefaßt, wobei vorzugsweise beidseitig, zumindest aber trubraumseitig die Plissierung durch Stützschichten 11 und 10 aus Gewebe verstärkt und abgestützt sind, welche in den Kunststoff der Dichtung 6 integriert sind. Integraler Bestandteil der Dichtung 6 ist auch ein angeformter, umlaufender Dichtungsflansch 7, der vorzugsweise durch das Stützgitter 10 (Gewebe) verstärkt ist, so daß die Plissierung insgesamt durch die Stützgitter 10,11 und die Dichtung 6,7 zu einer leicht handhabbaren kassettenförmigen Filtereinheit zusammengefaßt ist, und damit auch Filtergeräte mit großflächigen Filtersektionen bestückt werden können.

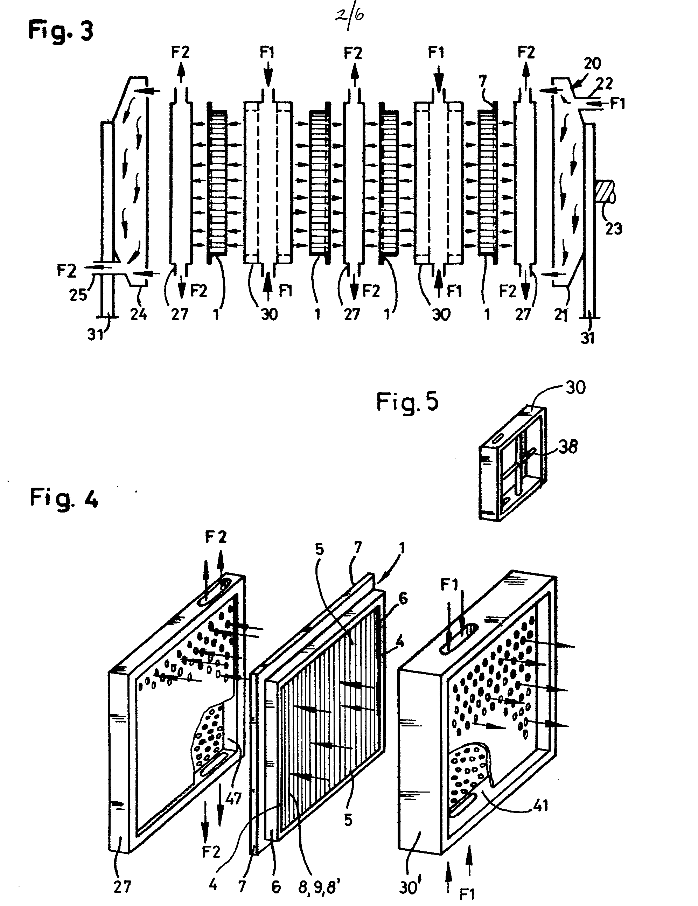

Fig. 3 zeigt die Verwendung des plissierten Filterelementes 1 in einem Filtergerät 20 gemäß Fig. 1, welches nur mit drainierenden Stützplatten 27 und Trubrahmen 30 ausgestattet ist. Die Trube F1 bzw. das Vorfiltrat F1 durchströmt in Parallelstaltung durch die Trubrahmen 30 hindurch die Filterelemente 1, die sich an den Stützplatten 27 abstützen. Das Fluid F1 verläßt das Gerät 20 durch den Anschluß 25 im festen Deckel 24 als Filtrat F2. Auch bei dieser Darstellung wird deutlich, daß sich diese spezielle Gerätekonstruktion durch die Verwendung der plissierten Filterelemente 1 wirtschaftlicher nutzen läßt, ohne daß dadurch Änderungen der Gerätekonstruktion notwendig sind und ohne daß die Handhabung der Einzelbauteile durch die Verwendung des plissierten Filterelementes in Kassettenform erschwert wird. Die üblicherweise quadratischen Gehäusesektionen haben Abmessungen zwischen 20 cm und 100 cm Seitenlänge.

SM 8401

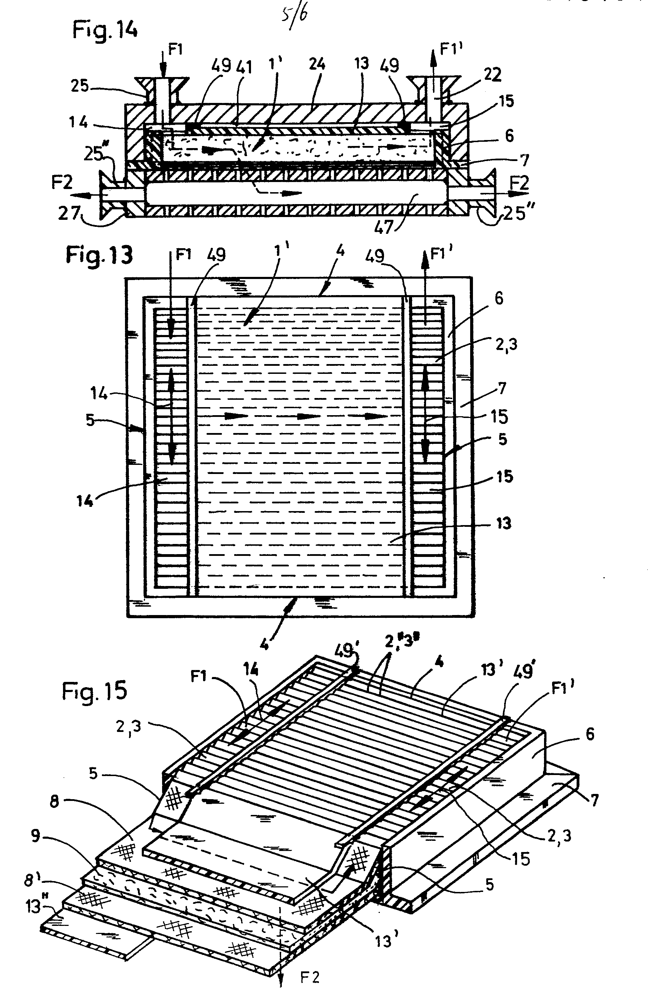

Der Trubrahmen 30' kann dabei ähnlich wie die doppelwandige Sieb- oder Stützplatte 27 gemäß Fig. 4 aufgebaut oder gemäß Fig. 5 als einfacher Hohlrahmen 30 mit kreuzförmiger Aussteifung 38 ausgebildet sein oder Diagonalstreben 38' (Fig. 11) aufweisen.

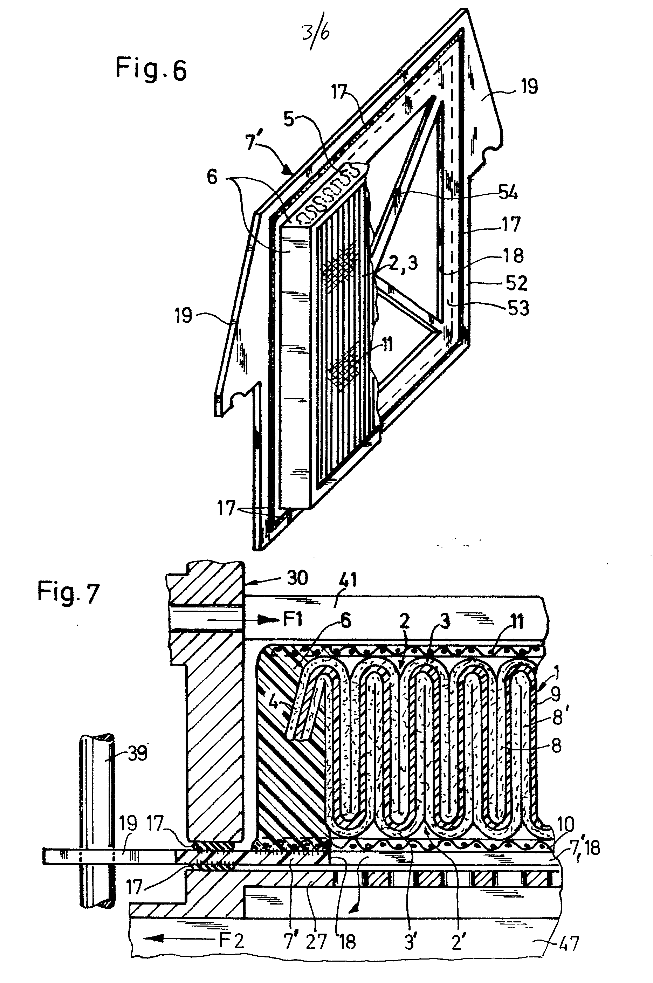

Die in Fig. 6 und 7 gezeigte Filterkassette ist eine für die Herstellung und Handhabung bevorzugte Ausführungsform. Abweichend zu der in Fig. 2 dargestellten und vorstehend beschriebenen Ausführungsform ist der Dichtungsflansch durch einen dünnwandigen Kunststoffrahmen 7' aus Hartkunststoff gebildet, der eine der freiliegenden Plissierung angepaßten Öffnung 18 aufweist. Der zur Öffnung 18 weisende Flanschbereich 53 ist mit der umlaufenden Dichtung 6 unter Einschluß der gegebenenfalls vorhandenen Stützschicht 10 dauerhaft und dicht verbunden, z.B. durch Siegelung, Schweißung oder Klebung, wobei vorteilhaft der Kunststoff des Rahmens 7' und der der Dichtung 6 aus derselben Familie stammen, z.B. aus Polypropylen bestehen.

Der periphere Flanschbereich 52 des Kunststoffrahmens 7' ist beidseitig mit einer dauerelastischen Dichtungsschnur 17 belegt, die in Umfangsrichtung des Kunststoffrahmens 7' umlaufend Anlageflächen und Dichtflächen für die abzudichtenden Gehäuseteile 27,30 bilden.

Die Gesamtstärke des Kunststoffrahmens 7' und der beiden Dichtungsschnüre 17 ist so bemessen, daß diese im verpreßten Zustand dieselbe Stärke haben, wie die zwischen den Gehäuseteilen 27,30 üblicherweise randseitig dichtend verpreßten Filterschichten oder Filtertücher.

SM 8401

Zur besseren Handhabung , Justierung und Fixierung des Filterelementes in bezug auf die Öffnung des Trubrahmens 30 und in bezug auf die Anlageflächen für die Dichtungsschnüre 17 an den Gehäusesektionen 27,30, sind in den Kunststoffrahmen 7' an zwei gegenüberliegenden Seiten seitlich abstehende Führungsnasen 19 integriert, die das Filterelement gleichermaßen wie die Gehäusesektionen 27,30 auf horizontalen Gestellholmen 39 bei der Montage und Demontage führen und abstützen.

Bei großen Filterkassetten von 60 cm bis 100 cm Seitenlänge ist die Öffnung 18 des Kunststoffrahmens 7' durch integrierte diagonal oder quer zu den Falten 2,3 verlaufende Stege 54 vergittert und versteift. Der ganze Kunststoffrahmen 7' ist vorzugsweise einstückig als Spritzteil oder als Plattenstanzteil ausgebildet.

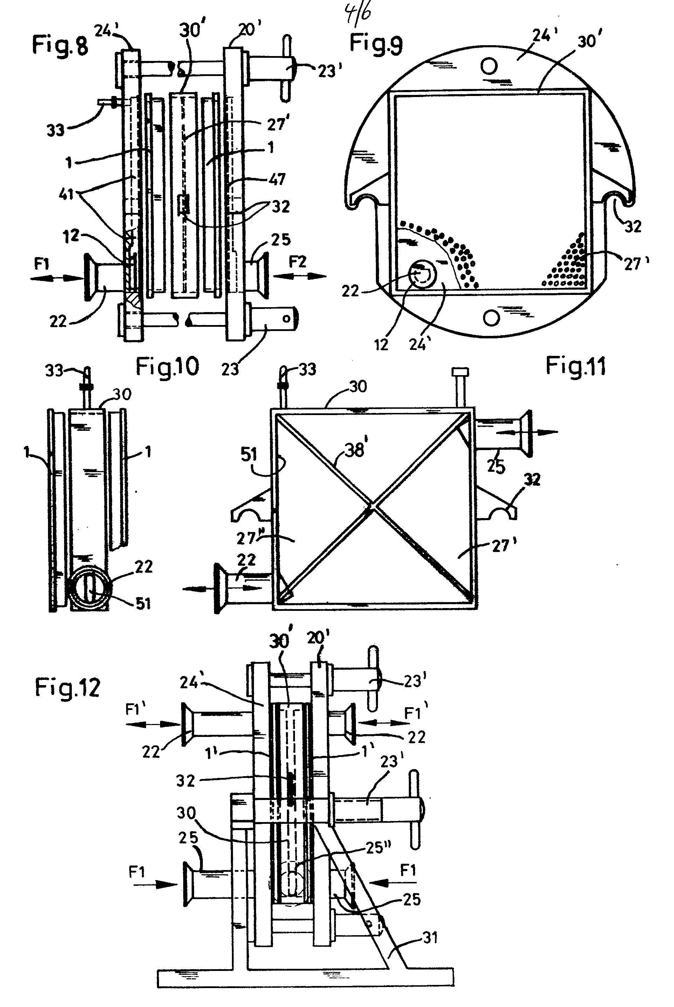

Die in Fig. 8 bis 14 dargestellten Filtergeräte und Filterelemente sind in ihren Ausmaßen gehäuseseitig auf eine dreiteilige Grundeinheit und kleinere Abmessungen begrenzt.

Das Filtergerät gemäß Fig. 8 und 9 besteht aus zwei runden Kopfplatten 24' und aus einem hohlen Rahmen 30' mit mittiger Siebplatte 27', auf der sich beidseitig je ein Filterelement 1 abstützt und die drei Gehäuseteile 24',20' und 30' randseitig abdichtet. Die so montierten Bauteile lassen sich über Spannbolzen 23' verspannen. Der Hohlrahmen 30' ist mit Hilfe von Stützhaken 32 an horizontalen Führungsbolzen eingehängt. Die Gerätekopfplatten 24' und 20' sind mit mindestens je einem Anschluß 22 bzw. 25 und einem Entlüftungsanschluß 33 ausgestattet. Im Bereich des Einlaßstutzens 22 für die Trube ist zum Schutz des Filterelementes 1 eine Prallplatte 12 im Trubraum 41 angeordnet. Das linke Filterelement 1 dient dabei zur Vorfiltration, währenddessen das rechte Filterelement 1 z.B. zur Nachfiltration bzw. Sterilfiltration dient.

Die in Fig. 10 und 11 dargestellte Variante zeigt einen Hohlrahmen 30 wi  in Fig. 4b perspektivisch dargestellt und zwei diagonal angeordneten Mittelanschlüssen 22,25, die den Hohlraum 51 zwischen den beiden Filterelementen 1 versorgen bzw. entsorgen, so daß die beiden Filterelemente 1 vom Hohlrahmen 30 her mit Fluid unter Druck versorgt werden und sich die Filterelemente 1 demgemäß an den nicht dargestellten drainierenden Gehäuseendplatten, ähnlich 24' und 20' gemäß Fig. 8,9, abstützen.

Bei der Gerätekonstruktion nach Fig. 12 sind die Gehäuseendplatten 24' und 20', die jeweils mit zwei Anschlüssen 22,25 ausgestattet sind, zusammen mit dem Hohlrahmen 30', wie im Prinzip in Fig. 4 dargestellt, an dem Gestell 31 gelagert und mit den Spannbolzen 23' miteinander verspannbar. Unter Verwendung des modifizierten Filterelementes 1' gemäß Fig. 13 sind beide Filterelemente 1' für die Mikrofiltration bzw. für die Ultrafiltration dynamisch überströmbar, wobei das Filtrat F2 von den einander gegenüberliegenden Seiten des Filterelementes 1' durch den Anschluß 25'' aus dem Hohlrahmen 30' abziehbar ist. Die Trube F1 tritt in die beiden Anschlüsse 25 ein und verläßt als Konzentrat F1' die beiden Anschlüsse 22 und 22, währenddessen das Filtrat F2 das Gehäuse durch den Anschluß 25'' verläßt.

SM 8401

Gemäß Fig. 13 besteht das dafür erforderliche Filterelement 1' aus einem Filterelement, wie es vorstehend bereits beschrieben worden ist. Dieses ist ergänzt durch eine quer zu den Stegrücken 3 und Faltenöffnungen 2 verlaufende Strömungsbarriere 13, die z.B. in Form einer fluiddichten Abdeckung mit der Dichtung 6 der beiden Endfaltenstege 4 der Plissierung fest verbunden ist und beiderseits der Dichtung 6 an beiden Stirnseiten 5 der Plissierung einen Verteilerkanal 14 bzw. Sammelkanal 15 freiläßt, so daß gemäß Fig. 14 in der Schnittdarstellung die Trube F1 durch den Anschluß 25 in den Verteilerkanal 14 eintritt und durch die sich gegen die Gehäuseplatte 24' anlegende Strömungsbarriere 13 gezwungen wird, in die Faltentiefe einzudringen und die Filterfläche in Richtung des Sammelkanales 15 zu überströmen und als Konzentrat F1' wieder aus der Gehäuseplatte 24 auszutreten. Entsprechend wird das andere Filterelement 1' über die Anschlüsse 25 und 22 versorgt bzw. entsorgt. Das Filtrat F2 beider Filterelemente 1' wird aus dem mittigen Anschluß 25'' abgeführt.

Zwei Dichtungsraupen 49 sorgen dafür, daß die Strömungsbarriere 13 sich am Gehäuse 24 dichtend anlegt..

Fig. 14 zeigt einen Vertikalschnitt durch eine Gehäusevariante, bei der das Gehäuseteil 24 den Trubraum aufnimmt und das Gehäuseteil 27 die doppelwandige Stützplatte bildet. Durch ein weiteres Gehäuseteil 24 kann das Gerät komplettiert werden und damit zwei Filterelemente 1' aufnehmen. Die Trube F1 wird durch die Strömungsbarriere 13 und die Dichtungsraupen 49 gezwungen, in die Faltentiefe einzudringen und die Falten zu überströmen.

SM 8401

Eine solche dynamische Strömungsführung ist insbesondere bei der Ultrafiltration notwendig, um ein zu schnelles Zusetzen der mikroporösen Filtermembranen zu verhindern.

Fig. 15 zeigt eine Variante zum Filterelement gemäß Fig. 13. Die fluiddichte Folie 13' ist gleichfalls beidseitig gegenüber der Hauptplissierung verkürzt, jedoch Teil dieser Plissierung. Die obere Faltenöffnung 2'' und Stegrücken 3'' der Folie 13' sind mit Dichtungsraupen 49' abgedeckt.

Auch für die Mikrofiltration kann es von Vorteil sein, eine bestimmte Strömungsführung zu erzwingen. Dies kann durch einen Stau des Filtratflusses erfolgen.

Fig. 15 zeigt die Anordnung eines Folienstreifens 13'' auf der Filtratraumseite des Filterelementes und zwar in dem dem Verteilerkanal 14 gegenüberliegenden Bereich. Der Folienstreifen 13'' kann dabei entweder wie bei 13 als Abdeckung oder wie bei 13' plissiert sein. Der Filtratfluß wird im Folienbereich gebremst, so daß ein Rückstau eintritt und ein zu schnelles Zusetzen des Filtratelementes auf der Trubseite verhindert wird.

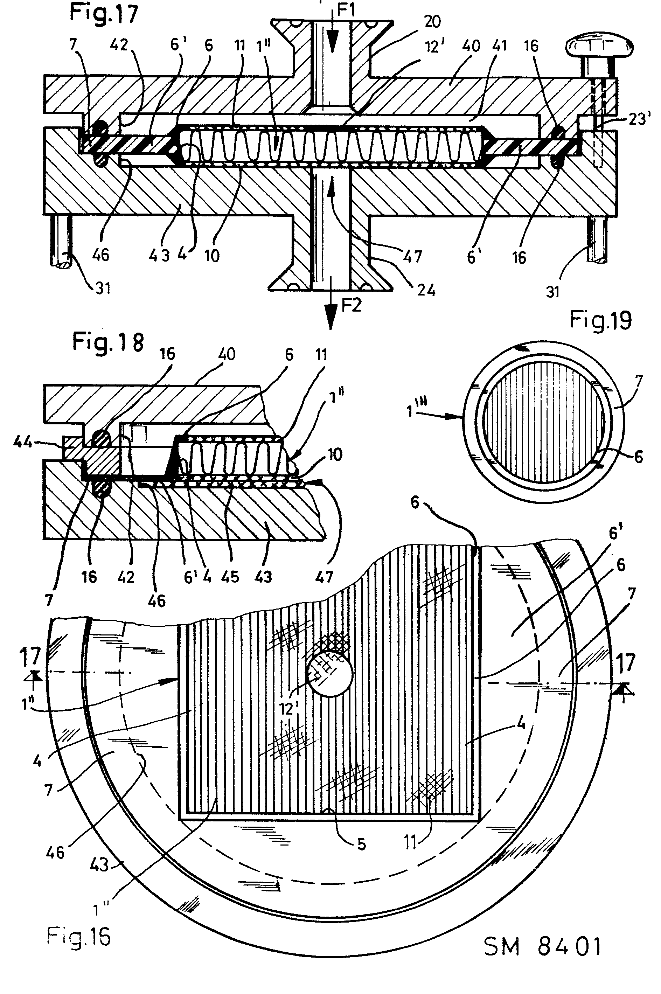

Gemäß Fig. 16 bis 19 sind Filterelemente 1'' bzw. 1'''' dargestellt für kreisrunde Flachfiltergeräte, wie sie nach dem Stand der Technik nach der DE-PS 28 25 441 und DE-OS 32 00 443 bekannt sind. Diese bestehen aus einem Gehäuseoberteil 40 und einem mit Stützfüßen 31 versehenen Gehäuseunterteil 43, zumeist aus Edelstahl, die mit Anschlüssen 22 und 25 und weiteren Anschlüssen ausgestattet sind. Erstere weisen Eindrehungen 42,46 auf, die den Trubraum und den Filtratraum bilden.

SM 8401

Die ineinandergreifenden Flansche sind mit O-Ring-Dichtungen 16 ausgestattet und klemmen ein kreisrundes Flachfilterelement leckdicht zwischen den beiden Gehäuseteilen 40 und 43 ein. Die Eindrehungen 42,46 dienen außerdem dazu, den kreisrunden Flachfilterzuschnitt beidseitig durch eine drainierende Stützkonstruktion flächig abzustützen. Die durch die Eindrehungen 42,46 gebildeten Freiräume der beiden Gehäuseteile 40,43 lassen sich demgemäß auch mit einem plissierten Filterelement 1'' nach dem Erfindungsgedanken bestücken, um z.B. größere Filtrationsmengen und eine längere Standzeit des Filterelementes zu erreichen. Das Filterelement gemäß Fig. 16 ist gebildet durch einen rechteckigen Flachfilterbandzuschnitt der zu einer quaderförmigen Scheibe plissiert ist, so daß die fertige Plissierung praktisch ein eingeschriebenes Quadrat zu der kleinsten kreisrunden Eindrehung 42,46 bildet und mit einer umlaufenden Dichtung 6 ausgestattet ist, die in die Flanschsegmente 6' und den umlaufenden Dichtungsflansch 7 übergeht und mit den beidseitigen Stützgittern 11,10 integriert ist. Die Flanschsegmente 6' sind ggf. zusätzlich entgegen dem Druckgefälle abzustützen, insbesondere bei der Ausführungsform gemäß Fig. 14, bei der der Dichtungsflansch 6',7 etwa mittig zur Plissierhöhe angeordnet ist. Ohne daß es einer konstruktiven Änderung bedarf, kann ein solches Flachfiltergerät sowohl mit Flachfilterzuschnitten und den bereits dafür vorhandenen Filterunterstützungen nach dem Stand der Technik oder auch mit dem plissierten Filterelement 1'' bestückt werden.

SM 8401

0154845

Fig. 18 zeigt eine Variante in dem das Filterelement 1''
mit einem Dichtungsflansch 6',7 ausgestattet ist, der
in der unteren Ebene der Plissierung angeordnet ist.
Das Filterelement 1'' kann ggf. durch eine zusätzliche
drainierende Filterunterstützung 45 abgestützt sein.
Der für die Plissierhöhe notwendige Trubraum 41 ist
durch einen Zwischenring 44 zusätzlich zu der Eindrehung 42 erweitert. Die Ausführungsform des Filterelementes 1'' nach Fig. 16,17 und 18 ist ohne Verschnitt herstellbar. Ist ein geringer Verschnitt aus
wirtschaftlichen Gründen oder aus herstellungstechnischen Gründen vertretbar, so kann die Plissierung
auch zur kreisrunden oder ovalen Gehäuseeindrehung
umbeschriebenen Quadrat bzw. Rechteck ausgebildet
sein, die dann auf das Sollmaß durch Abstanzung
reduziert und mit einer umlaufenden, der Gehäuseeindrehung bzw. des Hohlrahmens angepaßten Dichtung 6 mit Dichtungsflansch 7 ausgestattet ist, Fig. 19.

Derartige Flachfiltergehäuse nach Fig. 17 sind im
Bereich ihres Einlasses 22 gewöhnlich mit einer an
die Unterseite der Eindrehung 42 mit axialem Abstand
angeschraubten Prallplatte, ähnlich wie in Fig. 8 bei
12 angedeutet, ausgestattet, um eine zu starke Belastung des Filterelementes direkt unterhalb des Einlaßstutzens 22 zu verhindert. Anstelle einer gehäuseseitigen Prallplatte 12 kann die Prallplatte 12' auch
Bestandteil des Filterelementes 1'' bzw. 1''' sein,
indem das Stützgitter 11 in diesem Bereich unterhalb
des Einlasses 22 mit einer Dichtungsmasse ausgefüllt
ist. Größe und Form der Prallplatte 12' sind dabei dem
Querschnitt des Einlaßstutzens 22 angepaßt.

SM 8401

0154845

Auch für derartige Flachfiltergeräte ist die Bestückung mit dem plissierten Filterelement 1'' bzw.
1''' überaus einfach und die bisher für größere Filtrationsmengen wegen der kleinen Filterfläche leistungsmäßig unbefriedigenden teuren Filtrationsgeräte können nunmehr mit dem plissierten Filterelement vielseitiger und ökonomischer ausgenutzt
werden.

Alle Ausführungen haben gemeinsam den Vorteil, daß
der Dichtungsflansch 7,7' die bei Schichtenfiltern
üblichen radialen Leckverluste ausschließt und ein
Anhaften an den Dichträndern der Gehäuseteile 30,47
ausschließt. Das beim Einsatz von Schichtenfiltern
übliche Säubern der Gehäuseteile 30,47 von anhaftenden
Filterschichtrückständen kann bei der erfindungsgemäßen Ausbildung der Filterelemente entfallen.

SM 8401

0154845

- 18 -

Ansprüche:

1. Auswechselbares, rechteckiges, flaches, selektiv permeables Filterelement zum Bestücken der rahmenartigen Sektion eines Schichtenfiltergerätes aus Metall und/oder Hartkunststoff zur Filtration von Fluiden (Flüssigkeit und/oder Gas), wobei das Filterelement mit seinem Rand leckdicht und sandwichartig zwischen einem Gehäuseteil (30) trubraumseitig und einem Gehäuseteil (27) filtratraumseitig einspannbar und entgegen dem Druckgefälle auf einer drainierenden Gehäusestützplatte (27) abgestützt ist, wobei der Trubraum und Filtratraum mit Anschlüssen (22,25) für die Versorgung und Entsorgung der Gehäuseräume ausgestattet sind, dadurch gekennzeichnet, daß das flache Filterelement (1) aus einem dem Innenmaß eines Gehäuseteiles (30) in Länge, Breite und Tiefe (dieses Innenmaß im wesentlichen ausfüllenden) angepaßten, in eine Vielzahl von eng aneinanderliegenden Falten plissierten Flachfilterband mit parallelen Falten aus Faltenöffnungen (2,2') und Faltenstegen gebildet ist, wobei die offenen Falten (2) und die Stegrücken (3) einer Seite der Plissierung dem Trubraum und die offenen Falten (2') und die Stegrücken (3') der anderen Seite dem Filtratraum zugewandt sind und die zu einem flachen Quader (Platte) geformten Plissierung des mindestens einlagig aufgebauten Filterbandzuschnittes (8,8',9) rahmenartig mit einem die beidseitigen Endfaltenabschnitte (4) der Plissierung und die beiden Stirnseiten (5) der Plissierung umlaufend einfassenden Dichtung (6) aus Kunststoff randseitig im Sinne einer leckdichten Trennung des Trubraumes (41) vom Filtratraum (47) eingefaßt sind und diese mit einem angeformten Dichtungsflansch (7) ausgestattet ist, mit welchem die Filterkassette zwischen den Gehäuseteilen (27,30) einklemmbar ist.

SM 8401

2. Auswechselbares flaches, selektiv permeables Filterelement zum Bestücken eines flachen Filtergehäuses (40, 43) zur Filtration von Fluiden (Flüssigkeit und/oder Gas), wobei das Filterelement mit seinem Rand leckdicht und sandwichartig zwischen einem Gehäuseteil (40) mit Trubraum (41) (Retentatraum) und einem Gehäuseteil mit Filtratraum (47) (Permeatraum) eingespannt ist und entgegen dem Druckgefälle drainierend abgestützt ist, wobei der Trubraum (41) und Filtratraum (41) mit Anschlüssen (20,24) zur Versorung und Entsorgung der Gehäuseräume ausgestattet sind und bei dem mindestens ein Gehäuseteil (40,43) eine kreisrunde Eindrehung (42,46) zur Bildung des vom Filterelement getrennten Trubraumes raumes (47) aufweist,
dadurch gekennzeichnet, daß das flache Filterelement (1'') mit seiner filtrierenden Fläche aus einem der kleinsten kreisrunden Eindrehung (42,46) eines Gehäuseteiles (40, 43) angepaßten, innen liegenden Quadrates besteht und zwar gebildet aus einem einer Quadratseite angepaßten Flachfilterbandzuschnitt (8,8',9), der in eine Vielzahl von eng aneinanderliegen, parallelen Falten aus Faltenöffnungen (2,2') und Faltenstegen plissiert ist, wobei die offenen Falten (2) und die Stegrücken (3) der Plissierung der einen Seite dem Trubraum (41) und die offenen Falten (2') und die Stegrücken (3') der anderen Seite dem Filtratraum (47) zugewandt sind und die zu einem flachen Quader (Platte) geformte Plissierung des mindestens einlagigen Flachfilterbandzuschnittes (8, 8',9) rahmenartig mit einem die beiderseitigen Endfaltenabschnitte (4) der Plissierung und die beiden Stirnseiten (5) der Plissierung umlaufend einfassenden Dichtung (6,6') aus Kunststoff randseitig im Sinne einer leckdichten Trennung des Trubraumes (41) vom Filtratraum (47) eingefaßt sind und mit einem angeformten Dichtungsflansch (7) ausgestattet ist, mit welchem das Filterelement (1'') zwischen den Gehäuseteilen (40,43) einklemmbar ist.

SM 8401

3. Filterelement nach einem der Ansprüche 1 und 2, dadurch gekennzeichnet, daß das Flachfilterband mehrlagig aufgebaut ist und aus einer beidseitig von einem Filter- und/oder Stützvlies (8,8') abgedeckten mikroporösen Filtrationsmembran (9) mit einer Porengröße von 0,05 µm bis 3 µm bzw. cut off von 5.000 - 100.000 gebildet ist, die die gemeinsame Plissierung bilden.

4. Filterelement nach einem der Ansprüche 1 bis 3, dadurch gekennzeichnet, daß das Flachfilterband mehrlagig aufgebaut ist und aus einem trübseitigen dünnen Tiefenfilter (8), stromabwärts folgenden weiteren Tiefenfilter abnehmender Ausschlußgrenze und einer mikroporösen Filtrationsmembran (9) und von einer diese filtratseitig schützenden, drainierenden Stützschicht gebildet ist.

5. Filterelement nach einem der Ansprüche 1 bis 4, dadurch gekennzeichnet, daß mindestens die dem Trubraum (41) zugewandte Oberfläche der Plissierung durch ein Stützgitter (11) abgedeckt ist, dessen Ränder im Dichtungsrahmen (6,6') fest verankert sind.

6. Filterelement nach einem der Ansprüche 1 bis 5, dadurch gekennzeichnet, daß der Dichtungsflansch (7) durch ein Gitterwerk (10) aus monofilen Kunststoffäden verstärkt ist, das im Dichtungsrahmen (6,7) verankert ist und dessen den Dichtungsflansch (7) bildende Peripherie von einer elastischen Dichtungsmasse umhüllt ist, die beiderseits der Gitterebene über diese übersteht.

SV 8401

7. Filterelement nach einem der Ansprüche 1 bis 6, dadurch gekennzeichnet, daß die durch ein Gitterwerk (10,11) gebildete Flanschverstärkung Bestandteil einer einstückigen, offenen Gitterabdeckung der dem Trubraum (41) oder dem Filtratraum (47) zugewandten Seite der Plissierung ist.

8. Filterelement nach einem der Ansprüche 1 bis 7, dadurch gekennzeichnet, daß für die Bestückung von kreisrunden oder ovalen Gehäusekammern oder Rahmenfeldern ein durch das plissierte Filterband großflächiger gebildeter flacher Quader (Scheibe) zu einer der Gehäusekammer angepaßten Umrißform reduziert und durch den integrierten Dichtungsflansch (7) und Dichtungsrahmen (6) ergänzt ist (Fig. 19).

9. Filterelement nach einem der Ansprüche 1 bis 8, dadurch gekennzeichnet, daß für die dynamische Überströmbarkeit des plissierten Filterelementes (1) zur Ultrafiltration die Plissierung der freien Filterfläche auf der Trubseite eine im wesentlichen fluiddichte Abdeckung (13) als Strömungsbarriere aufweist, welche randseitig parallel mit Abstand zur Abdichtung (6) an den beiden gegenüberliegenden Plissierungsstirnseiten (5) verläuft und in den einander gegenüberliegenden Abdichtungen (6) der Endfaltenstege (4) gehaltert ist, wobei die beiden Freiräume zwischen den beiden Rändern der Strömungsbarriere und dem Dichtungsrand (6) der Plissierungsstirnseiten (5) einen quer zur Plissierung verlaufenden Verteilerkanal (14) und einen entsprechenden Sammelkanal (15) für die Trube bilden.

SM 8401

10. Filterelement nach Anspruch 9, dadurch gekennzeichnet, daß die fluiddichte Abdeckung als Deckschicht und Strömungsbarriere in Form einer Folie (13') der Faltung folgt und die einander zugekehrten Faltenstege (2'',3'') der Folie (13') dichtend aneinanderliegen und mindestens der zum Verteilerkanal (14) (Anströmseite) weisende Randbereich der Folie (13') durch eine die Stegrücken (3'') quer abdeckende Dichtungsraupe (49') gegenüber dem Verteilerkanal (14) abgedichtet und mit welchem die dem Trubraum (41) zugewandte Seite der Strömungsbarriere dichtend am Gehäuse abstützbar ist.

11. Filterelement nach Anspruch 9 und 10, dadurch gekennzeichnet, daß für die Mikrofiltration zusätzlich auf der dem Filtratraum (47) zugewandten Seite eine im wesentlichen fluiddichte Folie (13'') als Randstreifen und zusätzliche Schikane in die Faltung einplissiert ist, die den dem Verteilerkanal (14) zugeordneten Bereich der Faltung auf der Filtratstromseite abgedeckt und den direkten Filtratfluß im abgedeckten Bereich staut.

12. Filterelement nach einem der Ansprüche 1 bis 8, dadurch gekennzeichnet, daß die dem Trubraum zugewandte Seite des Filterelementes (1) eine integrierte Prallplatte (12') aufweist, welche als eine mit dem Dichtungsmittel ausgefüllte Gewebesektion des Stützgitters (11) ausgebildet und in der senkrechten Projektion des Einlaßstutzens (20) für die Trube angeordnet ist und dessen Querschnittsfläche etwa entspricht.

SM 8401

13. Filterelement nach einem der Ansprüche 1 bis 12, dadurch gekennzeichnet, daß der Dichtungsflansch der Filterkassette durch einen umlaufenden, eine Öffnung aufweisenden dünnwandigen Kunststoffrahmen (7') aus im wesentlichen inkompressiblen Hartkunststoff gebildet ist, dessen zur Öffnung (18) weisender Flanschbereich (53) mit der umlaufenden Dichtung (6) der Plissierung dauerhaft dichtend verbunden ist und dessen peripherer Flanschbereich (52) beidseitig mit einer dauerelastischen Dichtungsschnur (17) belegt ist, die in Umfangsrichtung des Kunststoffrahmens (7') umlaufend Anlageflächen für die abzudichtenden Gehäuseteile (27,30) bilden.

14. Filterelement nach Anspruch 13, dadurch gekennzeichnet, daß der Kunststoffrahmen (7') und die die Plissierung einrahmende Dichtung (6) aus Kunststoff derselben Kunststoffamilie sind und die Verbindung beider Teile (6,7') durch Siegelung, Schweißung oder Klebung gebildet ist.

15. Filterelement nach Anspruch 13 und 14, dadurch gekennzeichnet, daß der Rahmen (7') aus Hartkunststoff an gegenüberliegenden Seiten seitlich vorstehende und integrierte Führungsnasen (19) zum Fixieren der mit dem Rahmen (7') integrierten Plissierung am Gehäusegestell (39) aufweist.

16. Filterelement nach Anspruch 13 bis 15, dadurch gekennzeichnet, daß bei großflächigen Kunststoffrahmen (7') die Öffnung (18) durch Streben (54) vergittert bzw. der die freie Filterfläche abdeckende Bereich des Kunststoffrahmens (7') als Lochplatte ausgebildet ist.

SM 8401

Fig.1

0154845

1/6

Fig.2

SM 8151

**Fig. 3**

**Fig. 5**

**Fig. 4**

SM 8401

0154845

3/6

Fig. 6

Fig. 7

SM 8401

0154845

Fig.8

Fig.9

Fig.10

Fig.11

Fig.12

0154845

Fig.14

Fig.13

Fig.15

SM8401

0154845

Fig.17

Fig.18

Fig.19

Fig.16

SM 8401